(19) Europäisches Patentamt / European Patent Office / Office européen des brevets

(11) **EP 2 558 535 B1**

(12) **FASCICULE DE BREVET EUROPEEN**

(45) Date de publication et mention
de la délivrance du brevet:
**16.07.2014 Bulletin 2014/29**

(21) Numéro de dépôt: **11715175.3**

(22) Date de dépôt: **12.04.2011**

(51) Int Cl.:
*C08L 67/04* (2006.01)          *C08L 67/00* (2006.01)
*C08L 33/10* (2006.01)          *C08L 33/08* (2006.01)
*C08L 33/12* (2006.01)          *C08L 23/08* (2006.01)
*C08L 67/02* (2006.01)          *C08K 5/101* (2006.01)
*C08K 5/11* (2006.01)

(86) Numéro de dépôt international:
**PCT/EP2011/001821**

(87) Numéro de publication internationale:
**WO 2011/128064 (20.10.2011 Gazette 2011/42)**

(54) **COMPOSITION DE POLYMERES ISSUS DE RESSOURCES RENOUVELABLES**

ZUSAMMENSETZUNG VON AUS ERNEUERBAREN RESSOURCEN STAMMENDEN POLYMEREN

COMPOSITION OF POLYMERS DERIVED FROM RENEWABLE RESOURCES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.04.2010 BE 201000239**

(43) Date de publication de la demande:
**20.02.2013 Bulletin 2013/08**

(73) Titulaire: **Futerro S.A.
7760 Escanaffles (BE)**

(72) Inventeur: **COUPIN, Thierry
B-7141 Carnières (BE)**

(74) Mandataire: **Leyder, Francis
Total Research & Technology Feluy
Zone Industrielle C
7181 Seneffe (BE)**

(56) Documents cités:
**EP-A1- 1 911 807          US-A1- 2005 154 114
US-A1- 2008 281 018**

**EP 2 558 535 B1**

**Description**

**DOMAINE TECHNIQUE DE L'INVENTION**

La présente invention se rapporte à une composition de polymères issus de ressources renouvelables, en particulier le polylactide (PLA), ainsi qu'à des objets obtenus par des procédés usuels de transformation de matière plastique au départ de cette composition. En particulier, la composition de polymères de l'invention comprend un plastifiant dont il est souhaitable qu'il soit exempt de phtalate ainsi que des additifs qui améliorent sa résistance au choc; plus particulièrement, la présente invention se rapporte à ce type de composition polymères issus de ressources renouvelables ayant des propriétés d'élongation à la rupture supérieures à 200% ainsi que des propriétés de résistance à la chaleur améliorées.

La présente invention se rapporte également aux objets, ayant un ensemble de propriétés mécaniques et thermiques améliorées, obtenus au départ de cette composition par des procédés usuels de transformation de matières plastiques, notamment par moulage, par thermoformage ou tout autre procédé de mise en oeuvre.

**ARRIERE PLAN TECHNOLOGIQUE**

Les polymères synthétiques basés sur des composés issus de la pétrochimie ont eu un impact industriel très important au milieu du 20e siècle. Malgré les nombreux avantages de ces matériaux, deux inconvénients restent pour l'instant à solutionner : l'utilisation de ressources renouvelables pour leur production et leur valorisation après utilisation. Compte-tenu de leurs propriétés intrinsèques, les polymères issus de ressources renouvelables sont donc devenus une alternative importante et de nombreuses avancées ont été accomplies tant du point de vue de la synthèse que de la transformation de ces matériaux. Ceux-ci sont d'ailleurs utilisés pour un grand nombre d'applications comme le moulage, l'emballage ou encore le textile.

Parmi la variété des polymères issus de ressources renouvelables, l'acide polylactique ou polylactide (PLA) est un des plus couramment utilisés. Tenant compte de l'utilisation de ressources renouvelables, les polymères comme le PLA ont retenu particulièrement l'attention, notamment pour remplacer en partie certains articles et objets moulés en polychlorure de vinyle (PVC), qui malgré leurs bonnes balances de propriétés, présentent certaines lacunes du point de vue mouillabilité ou encore résistance thermique.

Cependant, ces polymères issus de ressources renouvelables doivent aussi être mis en oeuvre par moulage ou par injection, pour faire des objets qui doivent répondre à certains critères du point de vue de leurs propriétés mécaniques et physiques. Dès lors, il apparaît nécessaire d'élaborer des compositions comprenant ces polymères et contenant au moins un plastifiant et d'autres additifs afin de répondre aux propriétés exigées, comme la flexibilité, la dureté, la mouillabilité, la résistance au choc ou encore l'élongation. De plus, et en fonction des politiques de respect de l'environnement, il est souhaitable que le plastifiant utilisé soit exempt de phtalate.

Il apparaît également souhaitable que la composition polymère contienne des composés pour améliorer la résistance au choc. Dans ce cadre là, on a souvent constaté que l'utilisation de plastifiant exempt de phtalate, modifiait la température de transition vitreuse (Tg) de la composition, ce qui en conséquence avait une influence sur la résistance au choc.

D'une manière générale, il est un fait certain que l'on souhaite avoir une influence favorable sur l'environnement et donc que l'on vise à remplacer les objets en PVC par des objets fabriqués en polymères issus de ressources renouvelables.

D'autre part, il est apparu que même les compositions à base de PVC soufrent de certains inconvénients comme un allongement à la rupture insuffisant, une résistance thermique ou encore une mouillabilité inadéquates, ces deux dernières propriétés s'exprimant pour les objets qui en résultent par l'apparition de fissures ou encore la difficulté d'être mis en peinture.

De plus, à l'heure actuelle, pour certains objets moulés, comme par exemple des figurines, on exige que les compositions polymères dont elles sont issues répondent à au moins trois critères, à savoir des propriétés d'allongement à la rupture améliorées significativement, parce qu'elles doivent être à même de résister à une déformation sans dommages, ce qui peut être acquis si cet allongement à la rupture est supérieur à 200% , une dureté Shore A comprise entre 60 et 95 parce qu'elles doivent conserver leur stabilité et une mouillabilité exprimée par une tension superficielle supérieure à 34 dyn/cm de manière à pouvoir aisément recevoir un revêtement de peinture. Or, à l'heure actuelle, les compositions polymères existantes dont sont issus les objets moulés ou injectés ne rencontrent pas l'ensemble de ces propriétés.

De plus, il est fortement souhaitable que les compositions polymères destinées à la préparation d'objets moulés, comme par exemple des figurines, conservent en complément une bonne balance des autres propriétés mécaniques et physiques, à savoir comme indiqué ci-après :

une dureté Shore D < 50 ;

une résistance thermique exprimée par le module de conservation à 54°C > 20 MPa ;

une bonne résistance au choc exprimée par un index de ductilité > 30% ;

une énergie totale de fracture > 8 Joule ;

une déflexion > 18 mm et

une bonne résistance à la température sans présenter des craquelures.

US 2005/154114 décrit une composition comprenant de 5 à 95 % en poids d'un polymère biodégradable flexible ayant une température de transition vitreuse inférieure à 0 °C, de 95 à 5 % en poids d'un polymère biodégradable rigide ayant une température de transition vitreuse supérieure à 10 °C, et de 0.25 à 10 % en poids d'un agent de compatibilité. Dans un mode de réalisation spécifique, le polymère biodégradable flexible est un copolyester aliphatique aromatique, le polymère biodégradable rigide est un acide polylactique, et l'agent de compatibilité est un copolymère de styrène, méthacrylate et méthacrylate de glycidyle. La composition a une résistance Izod aux chocs élevée et une aptitude au traitement par moulage améliorée. Il est également possible d'ajouter dans la composition un plastifiant et de préférence un plastifiant soluble dans le polyester.

Cependant, il n'y a aucune indication dans ce brevet sur la façon de réaliser la combinaison ci-dessus de propriétés physiques et mécaniques de la composition décrite.

Il existe donc un besoin pour élaborer des compositions de polymères issus de ressources renouvelables répondant simultanément à tous ces critères et permettant de fabriquer des objets par les procédés usuels de transformation de matière plastique.

## RESUME DE L'INVENTION

La présente invention fournit une composition qui répond aux critères requis d'élongation, de dureté Shore A et de mouillabilité que l'on veut rencontrer tout en gardant une bonne balance des autres propriétés mécaniques et physiques telle que définie ci-dessus et qui permet d'obtenir des objets, par procédé usuel de transformation de matière plastique, qui répondent aux propriétés mécaniques et physiques demandées; ladite composition comprenant du polylactide, un agent modificateur de chaînes, un composé élastomérique pour améliorer la ductilité et un plastifiant de préférence exempt de phtalate.

La demanderesse a trouvé que les compositions de l'invention présentent non seulement des propriétés principales améliorées telles que l'allongement à la rupture minimum, le niveau de dureté shore A et la mouillabilité, exprimée par la tension superficielle, mais également toutes les autres propriétés mécaniques et physiques souhaitables.

Un objet de l'invention est de fournir une composition de polymères issus de ressources renouvelables qui présente à la fois :

- une propriété d'élongation à la rupture > 200% mesurée par la méthode ASTM D-638,
- une dureté Shore A comprise entre 60 et 95 mesurée par la méthode ASTM D-2240 et
- une mouillabilité, exprimée par une tension superficielle > 34 dyn/cm mesurée par la méthode ASTM D-2578.

Un autre objet de l'invention est que la composition ait des propriétés de résistance thermique, exprimée par un module de conservation à 54°C > 20 MPa mesurée par la méthode ASTM D-4062.

Un autre objet de l'invention est que la composition ait une résistance mécanique exprimé par une dureté Shore D < 50 mesurée par ASTM D-2240.

Un autre objet de l'invention, est que la composition ait un indice de ductilité > 30% mesuré par ASTM D-3763.

Un autre objet de l'invention est que la composition ait un indice total de fracture supérieur à 8 Joule mesuré par ASTM D-3763.

Un autre objet de l'invention est que les compositions aient une déflexion supérieure à 18 mm mesurée par ASTM D-3763.

La présente invention a également pour objet de fournir des articles ayant la bonne balance de propriétés au départ de ladite composition par les procédés usuels de transformation de la matière plastique comme le thermoformage, le moulage par extrusion, par injection ou par compression.

La présente invention a également pour objet de fournir une composition qui lors du démoulage ne présente que très peu d'arrachement de matière.

La Demanderesse a trouvé d'une manière inattendue que la composition de l'invention permet de rencontrer la balance de bonnes propriétés de ductilité, de dureté et d'élongation à la rupture (> 200%), ainsi que de bonnes propriétés de surface (douceur) et de démoulage.

En plus, la Demanderesse a également trouvé de manière inattendue qu'une telle composition présente de bonnes propriétés de mouillabilité permettant ainsi de peindre facilement les objets obtenus avec cette composition.

## DESCRIPTION DETAILLEE DE L'INVENTION

La présente invention fournit une composition polymère pour préparer des objets moulés ou injectés comprenant du polylactide et, basé sur le poids de ce polymère, de 17 à 25 % en poids d'un composé modificateur de chaînes, de 30 à 55 % en poids d'un polymère élastomérique et de 20 à 45 % en poids d'un plastifiant dont il est souhaitable qu'il soit exempt de phtalate.

La composition de la présente invention comprend donc du polylactide et un ensemble d'additifs comprenant nécessairement un plastifiant, un additif modificateur de chaînes et un polymère élastomérique d'origine renouvelable, comme additif améliorant la ductilité.

La présente invention se réfère à une composition polymère comprenant:

a) du polylactide, et basé sur le poids de ce polymère,

b) de 17 à 25 % en poids d'un composé modificateur de chaînes choisi parmi les copolymères et les terpolymères comprenant l'éthylène ou le styrène et un monomère insaturé porteur au moins d'une fraction époxyde ou acide carboxylique ou anhydride d'acide carboxylique et optionnellement d'une fraction (méth)acrylate,

c) de 30 à 55 % en poids d'un polymère élastomérique choisi parmi les polyesters biodégradables, les copolyesters aliphatiques, les copolyesters aromatiques et leurs mélanges et

d) de 20 à 45 % en poids d'un plastifiant.

Le polylactide utilisé dans la composition de l'invention a une masse moléculaire moyenne en nombre, exprimée en équivalent polystyrène (PS) généralement comprise entre 50.000 et 250.000.

Dans la présente invention, on entend par polylactide, le poly-L-lactide (PL-LA), le poly-D-lactide (PD-LA), des copolymères à base de lactides ainsi que des stéréocomplexes de PLA tels que ceux décrits dans les demandes de brevets WO2008/037773 et WO2008/037772. De préférence, le polylactide est le poly-L-lactide.

Le PLA, peut être utilisé en conjonction avec des stabilisants usuels afin d'éviter les dégradations de coloration ou même de transestérification.

La Demanderesse a maintenant trouvé de manière inattendue qu'en ajoutant au polymère élastomérique pour améliorer la ductilité, un plastifiant, de préférence exempt de phtalate et un agent modificateur de chaînes on obtenait une composition ayant les propriétés requises.

Dans la présente invention, on entend par modificateur de chaînes tous copolymères ou terpolymères tels que décrits ci-dessous qui viennent se greffer sur la chaîne de PLA

A titre de composé modificateur de chaînes, on le choisit généralement parmi les copolymères et les terpolymères comprenant l'éthylène ou le styrène et un monomère insaturé porteur au moins d'une fraction époxyde ou acide carboxylique ou anhydride d'acide carboxylique et optionellement d'une fraction (méth)acrylate. Dans la présente invention, le terme fraction est synonyme de groupe.

Préférentiellement, le composé modificateur de chaînes est choisi parmi les copolymères et les terpolymères comprenant l'éthylène ou le styrène et un monomère insaturé porteur d'une fraction d'anhydride d'acide carboxylique ou porteur d'une fraction époxyde et d'une fraction (méth)acrylate.

Plus préférentiellement, le composé modificateur de chaînes est choisi parmi les copolymères d'éthylène ou du styrène et de (méth)acrylate de glycidyle ou d'anhydride maléique et les terpolymères d'éthylène ou du styrène, de (méth)acrylate d'alkyle et de (méth)acrylate de glycidyle ou d'anhydride maléique. Parmi les (méth)acrylates d'alkyle, on peut citer ceux dont les alkyles ont entre 1 et 10 atomes de carbone comme par exemple le méthacrylate de méthyle, l'acrylate de méthyle, le méthacrylate d'éthyle, l'acrylate d'éthyle, l'acrylate de n-butyle, l'acrylate d'isobutyle, l'acrylate de 2-éthylhexyle, l'acrylate de n-octyle.

Les copolymères d'éthylène ou du styrène et de (méth)acrylate de glycidyle ou d'anhydride maléique peuvent contenir de 50 à 99 % en poids d'éthylène ou de styrène et de 1 à 50% en poids de (méth)acrylate de glycidyle ou d'anhydride maléique, de préférence de 90 à 98% en poids d'éthylène ou de styrène et de 2 à 10% en poids de (méth)acrylate de glycidyle ou d'anhydride maléique, le total des pourcentages faisant 100%.

Les terpolymères d'éthylène ou du styrène, de (méth)acrylate d'alkyle et de (méth)acrylate de glycidyle ou d'anhydride maléique peuvent contenir de 50 à 97% en poids d'éthylène ou du styrène, de 1 à 50% en poids de (méth)acrylate d'alkyle et de 0.2 à 10% en poids de (méth)acrylate de glycidyle ou d'anhydride maléique, le total des pourcentages faisant 100%. De préférence les terpolymères contiennent de 55 à 95% en poids d'éthylène ou du styrène, de 2 à 35% en poids de (méth)acrylate d'alkyle et de 0.3 à 8% en poids de (méth)acrylate de glycidyle ou d'anhydride maléique.

Encore plus préférentiellement, le composé modificateur de chaînes est choisi parmi les copolymères d'éthylène et de méthacrylate de glycidyle et les terpolymères d'éthylène ou du styrène, d'acrylate d'alkyle et de (méth)acrylate de glycidyle ou d'anhydride maléique.

Parmi ceux-ci on peut utiliser le copolymère d'éthylène et de méthacrylate de glycidyle vendu sous la dénomination Lotader®AX 8840 par Arkema France, le terpolymère d'éthylène, d'acrylate d'éthyle et d'anhydride maléique vendu sous la dénomination Lotader ®4700 par Arkema France ainsi que le terpolymère de styrène, d'acrylate d'alkyle et de méthacrylate de glycidyle vendu sous la dénomination Joncryl® par la société BASF.

Les terpol ymères d 'éthylène ou du styrène, d'acrylate d'alkyle et de méthacrylate de glycidyle sont vraiment préférés. En particulier on préfère utiliser un terpolymère d'éthylène, d'acrylate de méthyle et de méthacrylate de glycidyle. Un exemple d'un tel terpolymère est le Lotader®AX8900 vendu par Arkema France comprenant 68% en poids d'éthylène, 24% en poids d'acrylate de méthyle et 8% en poids de méthacrylate de glycidyle. Le composé modificateur de chaînes est utilisé généralement en des quantités comprises entre 17 et 25% en poids basé sur le poids du polylactide.

A titre de composé pour améliorer la ductilité, on utilise un polymère de type élastomérique d'origine renouvelable et/ou biodégradable. Dans la présente invention, on entend par polymère élastomérique, un polymère présentant des propriétés élastiques qui supporte de grandes déformations tout en revenant à son état initial après cessation de la contrainte. Le terme renouvelable s'applique à une ressource naturelle dont le stock peut se reconstituer sur une période courte à l'échelle humaine. Le terme biodégradable s'applique à un matériau organique s'il est dégradé sous l'action de micro-organismes en présence d'oxygène en dioxyde de carbone, eau et sels minéraux et, éventuellement, en sous-produits (résidus, nouvelle biomasse) ou s'il est dégradé en l'absence d'oxygène en dioxyde de carbone, méthane, sels minéraux et création d'une nouvelle biomasse.

Les polymères de type élastomérique utilisés dans la présente invention peuvent être choisis parmi les biopolyesters (polyesters biodégradables). On peut citer comme biopolyesters, les polyhydroxyalcanoates, préférentiellement les copolymères de polyhydroxyalcanoates tels que par exemple le poly(hydroxybutyrate-co-3-hydroxyvalerate) (PHBV), le poly(hydroxybutyrate-co 3-hydroxyhexanoate) ou le poly(hydroxyoctanoate-co-3-hydroxydecanoate). Les polymères de type élastomérique utilisés dans la présente invention peuvent aussi être choisis parmi les copolyesters aliphatiques ou aromatiques et leurs mélanges comme le poly(butylène adipate-co-téréphtalate) et le poly(butylène succinate-co-adipate). A titre de produits commercialisés répondant à cette définition et qui peuvent être utilisés dans la composition de l'invention, on peut citer l'Ecoflex®, produit vendu par BASF ou encore le NP EL 01 (grade expérimental), fourni par NaturePlast ou l'Apinat® vendu par la société Api. On l'utilise généralement en des quantités comprises entre 20 et 55% en poids basé sur le poids du PLA.

A titre de plastifiant, on utilise de préférence un plastifiant exempt de phtalate dans le but de respecter l'environnement étant entendu que d'autres plastifiants peuvent également convenir.

On entend par plastifiant, une substance chimique organique qui lorsqu'elle est ajoutée à la composition de l'invention augmente la flexibilité de cette dernière et donc son aptitude à se laisser modeler. A titre de plastifiant exempts de phtalates, qui peut être utilisé, on peut se référer à ceux cités dans « Van Nostrand's Encyclopedia of chemistry », cinquième édition, editée by Glenn D. Considine à la page 1316. Parmi ceux-ci, on peut citer par exemple les phosphates tel que le tricresyl phosphate, les esters d'acides aliphatiques dibasiques tels que les adipates, sebaçates et azelates, les esters d'acides gras. Parmi les plastifiants exempts de phtalate, on peut notamment utiliser ceux de la famille des citrates, en particulier des esters citrates (esters de l'acide citrique) comme le citrate de terbutylène ou tributyl citrate (TBC, numéro CAS: 77-94-1) ou encore des esters butyrates (esters de l'acide butyrique) comme le tri-éthylène glycol di 2-éthyl hexyl butyrate fourni par Proviron sous la dénomination L807 (grade expérimental) ou leurs mélanges. De préférence, le TBC est utilisé. Le plastifiant est généralement utilisé en des quantités comprises entre 20 et 45% en poids basé sur le poids du PLA.

La Demanderesse a trouvé de manière inattendue qu'en utilisant une composition contenant du PLA et un mélange d'Ecoflex® comme agent améliorant la ductilité , de Lotader®AX8900 comme modificateur de chaines et de TBC comme plastifiant en respectant les quantités en poids des différents constituants basées sur la quantité en poids du polymère issu de ressources renouvelables (le PLA), on améliorait non seulement les propriétés d'élongation à la rupture pour être généralement > 200% avec une dureté Shore A comprise entre 60 et 95 et une mouillabilité exprimée par une tension superficielle supérieure à 34 dyn/cm, mais également les propriétés de démoulage au cours duquel on n'observe plus d'arrachement de matière.

La composition de l'invention peut comprendre également des additifs pour améliorer l'aspect de surface des objets moulés. Finalement la composition peut également comprendre des fillers comme le talc ou autres analogues sans que cela affecte les propriétés finales de l'objet moulé ou injecté.

La composition de l'invention est particulièrement bien adaptée pour être moulée par extrusion, injection ou compression ou par thermoformage, selon des procédés de moulage usuels et avec des conditions opératoires de température et pression usuelles.

La Demanderesse a constaté de manière inattendue que si la composition comprenait notamment le plastifiant choisi parmi le citrate de terbutylène (tributyl citrate) et le le tri-éthylène glycol di 2-éthyl hexyl butyrate, on pouvait aisément démouler les objets moulés sans qu'il y ait d'arrachement de matières.

La présente invention se réfère également à un procédé de fabrication de la composition selon l'invention caractérisé en ce que l'on mélange, à l'état fondu, le polylactide, le modificateur de chaînes, le polymère élastomérique et le plastifiant.

La composition de l'invention est généralement obtenue par mélange des divers composés entrant dans la composition. On procède généralement à une température comprise entre 160 et 190°C. Le mélange peut se faire dans un mélangeur usuel qui peut également être un mélangeur statique ou dans un dispositif d'extrusion. Lorsque le mélange a lieu dans un mélangeur, tous les composés peuvent être introduits simultanément. Si le mélange se fait en extrudeuse, le plastifiant est de préférence introduit après les autres composés, lorsque ceux-ci se présentent déjà à l'état fondu. Après mélange, la composition selon l'invention est de préférence conditionnée sous forme de granulés.

La composition est ensuite destinée à être mise en forme à l'aide des procédés usuels de transformation de matières plastiques, notamment par moulage, par thermoformage ou tout autre procédé de mise en oeuvre pour l'obtention d'articles. La présente invention fournit ainsi un procédé de fabrication d'un article caractérisé en ce qu'il consiste à transformer la composition de l'invention par moulage par extrusion, par injection, ou par compression ou par thermoformage.

L'invention se réfère également à un article susceptible d'être obtenu par le procédé de l'invention. Parmi ceux-ci, on peut citer des figurines.

Exemples

Dans les exemples selon l'invention et les exemples comparatifs, le polylactide a été utilisé comme polymère rigide issu de ressources renouvelables. Plus particulièrement, le poly-L-lactide identifié ci-après PLA 4042 vendu par NatureWorks ayant une masse moléculaire moyenne en nombre d'environ 120.000 (équivalent PS) ou le poly-L-lactide identifié ci-après PLA 6201 vendu par NatureWorks ayant une masse moléculaire moyenne en nombre d'environ 100.000 (équivalent PS) a été utilisé.

Comme agent modificateur de chaînes, le Lotader®AX8900vendu par la société Arkema France a été utilisé. Le Lotader®AX8900 comprend 68% en poids d'éthylène, 24% en poids d'acrylate de méthyle et 8% en poids de méthacrylate de glycidyle.

Comme polymère élastomérique améliorant la ductilité, le poly(butylène adipate-co-téréphtalate) vendu par la société BASF sous la dénomination Ecoflex® F blend A1200 ou le NP EL 01 vendu en Europe par la société NaturePlast a été utilisé.

Comme agent plastifiant exempt de phtalate, le tri-éthylène glycol di 2-éthyl hexyl butyrate fourni par Proviron sous la dénomination L807 (grade expérimental) ou le tributyl citrate (TBC) vendu par Jungbunzlauer Landenburg gmbh sous le nom commercial Citrofol® a été utilisé.

Les résultats des mesures pour les exemples selon l'invention et pour les exemples comparatifs sont indiqués dans les divers tableaux ci-après. Les normes ASTM utilisées pour mesurer les différentes propriétés sont les suivantes :

- Dureté Shore A et D: D-2240 ;
- Tension superficielle : D-2578 ;
- Propriété de traction (allongement à la rupture) : D-638 ;
- Module de conservation à 54°C: D-4065 ;
- Test de choc (ductilité, énergie totale de fracture et déflexion) : D-3763. L'indice de ductilité est exprimé à partir de la formule suivante

$$( ( Energie\ à\ la\ rupture - Energie\ maximum) / Energie\ à\ la\ rupture) \times 100.$$

Exemples 1-2

On a introduit dans un malaxeur interne de type Brabender, à la température de 190°C, à une vitesse de 40 tours par minutes et pendant 15 minutes du PLA, soit du 4042 (exemple 1) ou du 6201. On y a ajouté d'abord un mélange d'agents stabilisants du PLA (Ultranox 626 et Irganox 1024) et ensuite on y a ajouté un agent améliorant la ductilité ainsi qu'un plastifiant exempt de phtalate dans les proportions reprises au tableau 1. On a également ajouté dans le mélangeur du $TiO_2$ comme colorant et le modificateur de chaînes (Lotader®AX8900).

On a récupéré de ce mélangeur une composition apte à être moulée par injection.
On a injecté cette composition dans un moule pour éprouvettes à une température de 190°C et sous une pression de 2 bars. On a maintenu cette composition dans le moule pendant une durée de 10 secondes. Les éprouvettes ont été démoulées et les propriétés de l'objet moulé mesurées.

Pour tous les objets moulés avec la composition de l'invention on n'a pas observé d'arrachement de matière lors du démoulage.

Pour tous les objets moulés avec la composition de l'invention on n'a pas observé l'apparition de fissures même après un traitement thermique allant de 20 à 160°C en 45 minutes (chauffe de 3°C par minute).

Exemple 1

L'agent améliorant la ductilité est l' Ecoflex® F blend A1200.
Le plastifiant est le L807.

Exemple 2

L'agent améliorant la ductilité est le NP EL 01.
Le plastifiant est le TBC.
On constate qu'avec ces compositions, l'ensemble des propriétés, principales et souhaitables, sont atteintes.

TABLEAU 1

|  |  | Exemples | 1 | 2 |
|---|---|---|---|---|
|  |  | Références | TC2 | TC6 |
| Composition (% en poids) | PLA | | 46 | 51 |
|  | Agent améliorant la ductilité | | 23 | 18 |
|  | Talc | | | |
|  | Plastifiant | | 20 | 20 |
|  | Modificateur de chaînes | | 10 | 10 |
|  | TiO$_2$ | | 0.5 | 0.5 |
|  | Ultranox 626 | | 0.25 | 0.25 |
|  | MD 1024 | | 0.25 | 0.25 |
|  | Total | | 100 | 100 |
| Propriétés | | | | |
| Dureté Shore A | Izod bars (4mm) | | 85 | 83 |
| Dureté Shore D | Izod bars (4mm) | | 49 | 40 |
| Surface | Tension superficielle (dyn/cm) | | 36 | 36 |
| Traction | Elongation à la rupture (%) | | 283 | 290 |
| Analyse thermo-mécanique | Module conservation à 54°C (MPa) | | 73.4 | 42.5 |
| Test choc | Indice de ductilité (%) | | 46 | 33 |
|  | Energie Totale (J) | | 10.2 | 9.6 |
|  | Déflexion (mm) | | 19 | 19 |

Exemples 3 & 4

On a préparé dans un mélangeur double vis à une température matière de 180°C, une composition avec du PLA qui contient tous les éléments de la formulation permettant d'atteindre les propriétés principales ainsi que les propriétés souhaitables.
Le PLA est le 4042.
Le plastifiant est le TBC.
Le modificateur de chaînes est le Lotader®AX8900.

Exemple 3

L'agent améliorant la ductilité est le NP EL 01.

Exemple 4

L'agent améliorant la ductilité est un mélange de NP EL 01 et d'Ecoflex® F blend A1200. Du talc a été ajouté comme constituant complémentaire dans cet exemple.

Les résultats obtenus sont indiqués dans le Tableau 2.

On constate qu'avec ces compositions, l'ensemble des propriétés, principales et souhaitables, sont atteintes.

TABLEAU 2

| | Exemples | 3 | 4 |
|---|---|---|---|
| | Références | TC13 | TC17 |
| Composition (% en poids) | PLA | 50 | 53.2 |
| | Agent améliorant la ductilité<br>NL EL 01<br>Ecoflex | 20 | 10<br>6.9 |
| | Talc | | 6.9 |
| | Plastifiant | 19 | 12 |
| | Modificateur de chaînes | 10 | 10 |
| | TiO$_2$ | 0.5 | 0.5 |
| | Ultranox 626 | 0.25 | 0.25 |
| | MD 1024 | 0.25 | 0.25 |
| | Total | 100 | 100 |
| Propriétés | | | |
| Dureté Shore A | Izod bars (4mm) | 93 | 94 |
| Dureté Shore D | Izod bars (4mm) | 36 | 40 |
| Surface | Tension superficielle (dyn/cm) | 35 | 35 |
| Traction | Elongation à la rupture (%) | 203 | 207 |
| Analyse thermo-mécanique | Module conservation à 54°C (MPa) | 39 | 38 |
| Test choc | Indice de ductilité (%) | 32 | 33 |
| | Energie Totale (J) | 9 | 12.3 |
| | Déflexion (mm) | 20 | 19 |

Exemple 5 (comparatif)

On a préparé comme dans les exemples 1 et 2, une composition avec du PLA mais qui ne contenait pas d'agent améliorant la ductilité.
Le PLA est le 6021.

Le plastifiant est le L807.

Le modificateur de chaînes est le Lotader®AX8900.

Exemple 6 (comparatif)

On a préparé comme dans les exemples 1 et 2, une composition avec du PLA mais qui ne contenait pas d'agent améliorant la ductilité.
Le PLA est le 6021.
Le plastifiant est le TBC.
Le modificateur de chaînes est le Lotader®AX8900.

Exemple 7 (comparatif)

On a préparé dans un mélangeur double vis à une température matière de 180°C, une composition avec du PLA mais qui ne contenait pas de plastifiant.
Le PLA est le 6021.
L'agent améliorant la ductilité est le NP EL 01.
Le modificateur de chaînes est le Lotader®AX8900.

Exemple 8 (comparatif)

On a préparé dans un mélangeur double vis à une température matière de 180°C, une composition avec du PLA mais qui ne contenait pas de modificateur de chaînes.
Le PLA est le 6021.
L'agent améliorant la ductilité est le NP EL 01.
Le plastifiant est le TBC.

Exemple 9 (comparatif)

Dans un mélangeur double vis à une température matière de 180°C, on a préparé une composition avec du PLA qui ne contenait pas d'agent améliorant la ductibilité.
Le PLA est le 6021.
Le plastifiant est le TBC.
Le modificateur de chaînes est le Lotader®AX8900.

Les résultats obtenus pour les exemples comparatifs 5 à 9 sont indiqués dans le Tableau 3. Pour tous les objets moulés des exemples comparatifs 5 à 9, on n'a pas observé l'apparition de fissures même après un traitement thermique allant de 20 à 160°C en 45 minutes (chauffe de 3°C par minute). On constate qu'aucun des objets moulés ne rencontre l'ensemble des propriétés, principales et souhaitables.

TABLEAU 3

|  |  | Exemples comparatifs | 5 | 6 | 7 | 8 | 9 |
|---|---|---|---|---|---|---|---|
|  |  | Références | TC1 | TC5 | TC10 | TC11 | TC12 |
| Composition (% en poids) | | PLA | 69 | 69 | 69 | 59 | 69 |
|  |  | Agent améliorant la ductilité |  |  | 20 | 20 |  |
|  |  | Plastifiant | 20 | 20 |  | 20 | 20 |
|  |  | Modificateur de chaînes | 10 | 10 | 10 |  | 10 |
|  |  | TiO$_2$ | 0.5 | 0.5 | 0.5 | 0.5 | 0.5 |
|  |  | Ultranox 626 | 0.25 | 0.25 | 0.25 | 0.25 | 0.25 |
|  |  | MD 1024 | 0.25 | 0.25 | 0.25 | 0.25 | 0.25 |
|  |  | Total | 100 | 100 | 100 | 100 | 100 |
| Propriétés | |  |  |  |  |  |  |
| Dureté Shore A | | Izod bars (4mm) | >95 | >95 | 99 | 92 | 94 |
| Dureté Shore D | | Izod bars (4mm) | 62 | 54 | 74 | 39 | 45 |
| Surface | | Tension superficielle (dyn/cm) | 36 | 36 | 38 | 32 | 35 |
| Traction | | Elongation à la rupture (%) | 253 | 250 | 253 | 258 | 190 |
| Analyse thermo-mécanique | | Module Conservation à 54°C (MPa) | 28.5 | 16.7 | 485 | 24 | 6.9 |
| Test choc | | Indice de ductilité(%) | 47 | 21 | 27 | 33 | 14 |
|  |  | Energie Totale (J) | 16 | 13.5 | 8.5 | 17.2 | 18 |
|  |  | Déflexion (mm) | 20 | 19 | 16 | 22 | 22 |

Exemples 10 et 11 (comparatifs)

A titre de comparaison on a moulé les mêmes éprouvettes dans les mêmes conditions opératoires mais avec deux grades de PVC usuels convenant généralement pour ce type de moulage par injection.

Les résultats obtenus sont indiqués dans le Tableau 4.

Pour tous les objets moulés à partir de deux grades de PVC, on a observé l'apparition de fissures après un traitement thermique allant de 20 à 160°C en 45 minutes (chauffe de 3°C par minute).

On constate que l'allongement à la rupture est à peine la moitié de ce que l'on obtient avec les compositions de l'invention.

TABLEAU 4

|  |  | Exemples comparatifs | 10 | 11 |
|---|---|---|---|---|
|  |  | Références | PVC 88 | PVC 92 |
| Propriétés |  |  |  |  |
| Dureté Shore A | Izod bars (4mm) |  | 86 | 91 |
| Dureté Shore D | Izod bars (4mm) |  | 40 | 48 |
| Surface | Tension superficielle (dyn/cm) |  | 32 | 32 |
| Traction | Elongation à la rupture (%) |  | 130 | 125 |
| TMA | Module de conservation à 54°C (MPa) |  | 20.8 | 49.3 |
| Test choc | Indice de ductilité (%) |  | 25 | 26 |
|  | Energie Totale (J) |  | 9.2 | 9.3 |
|  | Déflexion (mm) |  | 17 | 18 |

## Revendications

1.  Une composition polymère comprenant :

    a) du polylactide, et basé sur le poids de ce polymère,
    b) de 17 à 25 % en poids d'un composé modificateur de chaînes choisi parmi les copolymères et les terpolymères comprenant l'éthylène ou le styrène et un monomère insaturé porteur au moins d'une fraction époxyde ou acide carboxylique ou anhydride d'acide carboxylique et optionnellement d'une fraction (méth)acrylate.,
    c) de 30 à 55 % en poids d'un polymère élastomérique choisi parmi les polyesters biodégradables, les copolyesters aliphatiques, les copolyesters aromatiques et leurs mélanges et
    d) de 20 à 45 % en poids d'un plastifiant.

2.  Une composition selon la revendication 1 **caractérisée en ce que** le polylactide a une masse moléculaire moyenne en nombre comprise entre 50.000 et 250.000.

3.  Une composition selon l'une quelconque des revendications 1 ou 2, **caractérisée en ce que** le composé modificateur de chaînes est choisi parmi les copolymères et les terpolymères comprenant l'éthylène ou le styrène et un monomère insaturé porteur d'une fraction d'anhydride d'acide carboxylique ou porteur d'une fraction époxyde et d'une fraction (méth)acrylate.

4.  Une composition selon la revendication 3 **caractérisée en ce que** le composé modificateur de chaînes est choisi parmi les copolymères d'éthylène ou du styrène et de (méth)acrylate de glycidyle ou d'anhydride maléique et les terpol ymères d'éthylène ou du styrène, de (méth)acrylate d'alkyle et de (méth)acrylate de glycidyle ou d'anhydride maléique.

5.  Une composition selon la revendication 4 **caracterisée en ce que** le composé modificateur de chaînes est choisi parmi le copolymère d'éthylène et de méthacrylate de glycidyle et les terpolymères d'éthylène ou du styrène, d'acrylate d'alkyle et de (méth)acrylate de glycidyle ou d'anhydride maléique.

**6.** Une composition selon la revendication 5 **caracterisée en ce que** le composé modificateur de chaînes est choisi parmi le copolymère d'éthylène et de méthacrylate de glycidyle et les terpolymères d'éthylène ou du styrène, d'acrylate d'alkyle et de méthacrylate de glycidyle, préférentiellement le terpolymère d'éthylène, d'acrylate de méthyle et de méthacrylate de glycidyle.

**7.** Une composition selon l'une quelconque des revendications 1 à 6, **caractérisée en ce que** le polymère élastomérique est choisi parmi le poly(butylène adipate -co-téréphtalate) et le poly(butylène succinate-co-adipate).

**8.** Une composition selon l'une quelconque des revendications 1 à 7, **caractérisée en ce que** le plastifiant est choisi parmi les esters citrates, les esters butyrates et leurs mélanges.

**9.** Procédé de préparation d'une composition selon l'une quelconque des revendications 1 à 8 **caractérisé en ce que** l'on mélange à l'état fondu, le polylactide, le modificateur de chaînes, le polymère élastomérique et le plastifiant.

**10.** Procédé de fabrication d'un article **caractérisé en ce qu'**il consiste à transformer la composition selon l'une quelconque des revendications 1 à 8 par moulage par extrusion, par injection, ou par compression ou par thermoformage.

**11.** Article susceptible d'être obtenu par le procédé selon la revendication 10.

**12.** Article selon la revendication 11 **caractérisé en ce que** l'article est une figurine.

**Patentansprüche**

**1.** Polymerzusammensetzung, die umfasst:

a) Polylactid, und basierend auf dem Gewicht dieses Polymers,
b) 17 bis 25 Gew.-% einer kettenmodifizierenden Zusammensetzung, die aus den Copolymeren und den Terpolymeren ausgewählt ist, die Ethylen oder Styrol und ein ungesättigtes Monomer als Träger mindestens einer Epoxyd- oder Carboxylsäure- oder Carboxylsäureanhydridfraktion und optional einer (Meth)acrylatfraktion umfassen,
c) 30 bis 55 Gew.-% eines Elastomerpolymers, das aus den biologisch abbaubaren Polyestern, den aliphatischen Copolyestern, den aromatischen Copolyestern und ihren Gemischen ausgewählt ist, und
d) 20 bis 45 Gew.-% eines Weichmachers.

**2.** Zusammensetzung nach Anspruch 1, **dadurch gekennzeichnet, dass** das Polylactid eine zahlenmäßig durchschnittliche molekulare Masse zwischen 50.000 und 250.000 inklusive hat.

**3.** Zusammensetzung nach einem der Ansprüche 1 oder 2, **dadurch gekennzeichnet, dass** die kettenmodifizierende Zusammensetzung aus den Copolymeren und den Terpolymeren ausgewählt ist, die Ethylen oder Styrol und ein ungesättigtes Monomer als Träger einer Carboxylsäureanhydridfraktion oder als Träger einer Epoxydfraktion und einer (Meth)acrylatfraktion umfassen.

**4.** Zusammensetzung nach Anspruch 3, **dadurch gekennzeichnet, dass** die kettenmodifizierende Zusammensetzung aus den Ethylen- oder Styrol-Copolymeren und Glycidyl(meth)acrylat oder Maleinsäureanhydrid und den Ethylen- oder Styrol-Terpolymeren, Alkyl(meth)acrylat und Glycidyl(meth)acrylat und Maleinsäureanhydrid ausgewählt ist.

**5.** Zusammensetzung nach Anspruch 4, **dadurch gekennzeichnet, dass** die kettenmodifizierende Zusammensetzung aus dem Ethylen-Copolymer und Glycidylmethacrylat und den Ethylen- oder Styrol-Terpolymeren, Alkylacrylat und Glycidyl(meth)acrylat oder Maleinsäureanhydrid ausgewählt ist.

**6.** Zusammensetzung nach Anspruch 5, **dadurch gekennzeichnet, dass** die kettenmodifizierende Zusammensetzung aus dem Ethylen-Copolymer und Glycidylmethacrylat und den Ethylen- oder Styrol-Terpolymeren, Alkylacrylat und Glycidylmethacrylat, vorzugsweise aus Ethylen-Terpolymer, Methylacrylat und Glycidylmethacrylat ausgewählt ist.

**7.** Zusammensetzung nach einem der Ansprüche 1 bis 6, **dadurch gekennzeichnet, dass** Elastomerpolymer aus dem Poly(butylenadipat-co-terephtalat) und dem Poly(butylensuccinat-co-adipat) ausgewählt ist.

**8.** Zusammensetzung nach einem der Ansprüche 1 bis 7, **dadurch gekennzeichnet, dass** der Weichmacher aus den Citratestern, den Butyratestern und ihren Gemischen ausgewählt ist.

**9.** Zubereitungsverfahren einer Zusammensetzung nach einem der Ansprüche 1 bis 8, **dadurch gekennzeichnet, dass** das Polylactid, der Kettenmodifikator, das Elastomerpolymer und der Weichmacher in geschmolzenem Zustand gemischt werden.

**10.** Herstellungsverfahren eines Artikels, **dadurch gekennzeichnet, dass** es darin besteht, die Zusammensetzung nach einem der Ansprüche 1 bis 8 durch Formen, durch Extrusion, durch Spritzen oder durch Kompression oder durch Warmformen umzuformen.

**11.** Artikel, der durch das Verfahren nach Anspruch 10 herstellbar ist.

**12.** Artikel nach Anspruch 11, **dadurch gekennzeichnet, dass** der Artikel eine Figur ist.

**Claims**

**1.** A polymer composition comprising:

a) polylactide, and based on the weight of this polymer:
b) 17 to 25 % by weight of a chain-modifying compound selected from among copolymers and terpolymers comprising ethylene or styrene and an unsaturated monomer carrying at least an epoxide or carboxylic acid or carboxylic acid anhydride fraction and optionally a (meth)acrylate fraction;
c) 30 to 55 % by weight of an elastomeric polymer selected from among biodegradable polyesters, aliphatic copolyesters, aromatic copolyesters and the mixtures thereof; and
d) 20 to 45 % by weight of a plasticizer.

**2.** A composition according to claim 1, **characterized in that** the polylactide has a number average molecular weight of between 50,000 and 250,000.

**3.** A composition according to any of claims 1 or 2, **characterized in that** the chain-modifying compound is selected from among copolymers and terpolymers comprising ethylene or styrene and an unsaturated monomer carrying a carboxylic acid anhydride fraction or carrying an epoxide fraction and a (meth)acrylate fraction.

**4.** A composition according to claim 3, **characterized in that** the chain-modifying compound is selected from among the copolymers of ethylene or styrene and glycidyl (meth)acrylate or maleic anhydride and the terpolymers of ethylene or styrene, of alkyl (meth)acrylate and of glycidyl (meth)acrylate or maleic anhydride.

**5.** A composition according to claim 4, **characterized in that** the chain-modifying compound is selected from among the copolymer of ethylene and glycidyl methacrylate and the terpolymers of ethylene or styrene, of alkyl acrylate and of glycidyl (meth)acrylate or maleic anhydride.

**6.** A composition according to claim 5 **characterized in that** the chain-modifying compound is chosen from among the copolymer of ethylene and glycidyl methacrylate and the terpolymers of ethylene or styrene, of alkyl acrylate and of glycidyl methacrylate, preferably the terpolymer of ethylene, methyl acrylate and glycidyl methacrylate.

**7.** A composition according to any of claims 1 to 6, **characterized in that** the elastomeric polymer is selected from among poly(butylene adipate-co-terephthalate) and poly(butylene succinate-co-adipate).

**8.** A composition according to any of claims 1 to 7, **characterized in that** the plasticizer is chosen from among citrate esters, butyrate esters and the mixtures thereof.

**9.** A method for preparing a composition according to any of claims 1 to 8, **characterized in that** the polylactide, the chain modifier, the elastomeric polymer and the plasticiser are mixed in the molten state.

**10.** A process for manufacturing an article **characterized in that** it consists of transforming the composition according to any of claims 1 to 8 by extrusion moulding, by injection, by compression or by thermoforming.

**11.** An article able to be obtained using the process according to claim 10.

**12.** An article according to claim 11 **characterized in that** the article is a figurine.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005154114 A
- WO 2008037773 A
- WO 2008037772 A